# FASCICULE DE BREVET EUROPEEN

(11) **EP 4 488 833 B1**
(45) Date de publication et mention de la délivrance du brevet: **22.10.2025**
(21) Numéro de dépôt: 24186150.9
(22) Date de dépôt: 03.07.2024
(51) Int. Cl.: G06F 9/50, G06F 12/14, G06F 21/79

(54) **CONFIGURATION D'UNE MÉMOIRE**
SPEICHERANORDNUNG
CONFIGURING A MEMORY

(30) Priorité: 07.07.2023 FR 2307301
(43) Date de publication de la demande: 08.01.2025
(73) Titulaire: STMicroelectronics International N.V., 1228 Plan-les-Ouates, Geneva (CH)
(72) Inventeur: LU, Jingyi, 38210 VOUREY (FR)
(74) Mandataire: Cabinet Beaumont

(56) Documents cités:
- US-A1- 2018 196 956
- US-A1- 2019 196 984
- US-A1- 2020 218 673
- US-A1- 2021 264 065

## Description

### Domaine technique

La présente description concerne de façon générale les circuits et dispositifs électroniques et les applications logicielles qu'ils peuvent mettre en oeuvre. La présente description se rapporte plus particulièrement à une interface de configuration d'une application exécutée par un processeur.

### Technique antérieure

Un processeur, appelé en anglais "Central Processing Unit" (CPU), est un composant électronique complexe qui est utilisé pour mettre en oeuvre des séries d'instructions logicielles, et qui peut donc permettre d'exécuter des applications.

Une application logicielle peut requérir, pour son bon fonctionnement, l'accès à diverses fonctionnalités d'un dispositif qui la met en oeuvre, comme des mémoires, ou d'autres des composants électroniques spécifiques, etc. Avant d'être mise en oeuvre par un dispositif électronique, une application utilise généralement une interface de configuration, lui permettant de configurer les accès aux diverses fonctionnalités du dispositif. Le document US 2020/218673 A1 divulgue des techniques de contrôle d'accès à une mémoire. Le document US 2020/218673 A1 divulgue qu'une zone mémoire peut se voir assignée une de trois valeurs d'attributs de sécurité:sécurisée, non sécurisée et non sécurisée appelable à

Il serait souhaitable de pouvoir améliorer, au moins en partie, certains aspects de l'exécution d'application par un processeur, et en particulier, certains aspects des interfaces de configuration d'une application exécutées par un processeur.

### Résumé de l'invention

Il existe un besoin pour un procédé de configuration d'une application exécutée par un processeur permettant une optimisation de la gestion des mémoires associés au processeur.

Il existe un besoin pour une interface de configuration d'une application exécutée par un processeur permettant une optimisation de la gestion des mémoires associées au processeur. La présente invention est définie par les revendications indépendantes jointes auxquelles il convient de se référer.

Un mode de réalisation pallie tout ou partie des inconvénients des procédés de configuration d'application connus.

Un mode de réalisation pallie tout ou partie des inconvénients des interfaces de configuration d'application connus.

Un mode de réalisation prévoit un procédé de configuration d'une application exécutée par un processeur, permettant, en outre, une optimisation du nombre de plages de mémoire associées à l'application utilisées par une application en se basant sur des valeurs représentant des niveaux de sécurité desdites plages de mémoire associée à l'application.

Un mode de réalisation prévoit une interface de configuration d'une application exécutée par un processeur, permettant, en outre, une optimisation du nombre de plages de mémoire associées à l'application utilisées par une application en se basant sur des valeurs représentant des niveaux de sécurité desdites plages de mémoire associée à l'application.

Un mode de réalisation prévoit un procédé de configuration d'une application exécutée par un processeur, permettant, en outre, une optimisation du nombre de plages de mémoire associé à un contrôleur d'accès et dont les données stockées sont utilisées par une application. L'accès par l'application à la mémoire est fait par le biais du contrôleur d'accès. L'optimisation du nombre de plages mémoire est réalisée en se basant sur des valeurs représentant des niveaux de sécurité desdites plages de mémoire. Le contrôleur d'accès peut comprendre un ou plusieurs registres indiquant des plages de mémoires, avec des niveaux de sécurité donnés.

Un mode de réalisation prévoit un procédé de configuration d'une mémoire pour l'exécution d'une application adaptée à être exécutée par un processeur et utilisant au moins deux première et deuxième ressources mémoire contiguës associées à une application et placées dans au moins une zone mémoire d'au moins une mémoire ,
dans lequel ledit procédé comprend une étape de fusion desdites au moins deux première et deuxième ressources mémoire en une troisième ressources mémoire , si lesdites au moins deux première et deuxième portions ont une même valeur de l'attribut de sécurité,
le procédé comprenant, en outre, une étape de génération de données de configuration de plages mémoire d'une mémoire .

Un autre mode de réalisation prévoit une interface de configuration adaptée à mettre en oeuvre un procédé de configuration d'une mémoire pour l'exécution d'une application adaptée à être exécutée par un processeur et utilisant au moins deux première et deuxième ressources mémoire contiguës associées à une application et placées dans au moins une zone mémoire d'au moins une mémoire,
dans lequel ledit procédé comprend une étape de fusion desdites au moins deux première et deuxième ressources mémoire en une troisième ressources mémoire , si lesdites au moins deux première et deuxième portions ont une même valeur de l'attribut de sécurité,
le procédé comprenant, en outre, une étape de génération de données de configuration de plages mémoire d'une mémoire.

Selon un mode de réalisation, ladite valeur dudit attribut de sécurité désigne le niveau de sécurité d'une portion d'une mémoire.

Selon un mode de réalisation, ladite valeur dudit attribut d'une ressource mémoire de ladite application peut être égale à :
- sécurisée ;
- non sécurisée ; et
- non sécurisée appelable.

Selon un mode de réalisation, si la valeur de l'attribut de la première portion est égale à non sécurisée, et que la valeur de l'attribut de la deuxième portion est égale à non sécurisée appelable, et que la deuxième portion est placée dans une zone mémoire dont la valeur de l'attribut est égale à non sécurisé appelable, alors lesdites au moins deux première et deuxième portions sont fusionnées en la troisième portion, et la valeur de l'attribut de la troisième portion est égale à non sécurisée, lesdites première et deuxième portion étant strictement contigües.

Un autre mode de réalisation prévoit un dispositif comprenant une interface décrite précédemment.

Selon un mode de réalisation, le dispositif comprend, en outre, ledit processeur adapté à mettre en oeuvre l'application.

Selon un mode de réalisation, le dispositif comprend, en outre, ladite au moins une mémoire .

Un autre mode de réalisation prévoit un moyen non transitoire lisible par ordinateur adapté à mettre en oeuvre le procédé décrite précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un exemple d'un dispositif électronique adapté à la mise en oeuvre des modes de réalisation des figures 2 à 12 ;
la figure 2 représente, très schématiquement et sous forme de blocs, un mode de réalisation d'une interface de configuration d'une application ;
la figure 3 représente un schéma-bloc illustrant un mode de mise en oeuvre d'un procédé de configuration d'une application ;
la figure 4 représente, très schématiquement et sous forme de blocs, un exemple de la mise en oeuvre d'une étape du procédé de configuration de la figure 3 ;
la figure 5 représente, très schématiquement et sous forme de blocs, un exemple de la mise en oeuvre d'une autre étape du procédé de configuration de la figure 3 ;
la figure 6 représente, très schématiquement et sous forme de blocs, un exemple de la mise en oeuvre d'une autre étape du procédé de configuration de la figure 3 ;
la figure 7 représente, très schématiquement et sous forme de blocs, un exemple de la mise en oeuvre d'une autre étape du procédé de configuration de la figure 3 ;
la figure 8 représente, très schématiquement et sous forme de blocs, un exemple de la mise en oeuvre d'une autre étape du procédé de configuration de la figure 3 ;
la figure 9 représente, très schématiquement et sous forme de blocs, un exemple de la mise en oeuvre d'une autre étape du procédé de configuration de la figure 3 ;
la figure 10 représente, très schématiquement et sous forme de blocs, un exemple de la mise en oeuvre d'une autre étape du procédé de configuration de la figure 3 ;
la figure 11 représente, très schématiquement et sous forme de blocs, un exemple de la mise en oeuvre d'une autre étape du procédé de configuration de la figure 3 ; et
la figure 12 représente, très schématiquement et sous forme de blocs, un exemple de la mise en oeuvre d'une autre étape du procédé de configuration de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concerne un procédé de configuration d'une application exécutée par un processeur et utilisant des ressources mémoire associées audit processeur, et l'interface de configuration associée. Les ressources mémoire sont ici des portions, des parties et des zones d'une ou plusieurs mémoires réelles ou virtuelles gérées par ledit processeur.

Selon un mode de réalisation, l'interface de configuration comprend plusieurs fonctionnalités. Une première fonctionnalité est de permettre la modification d'attribut de sécurité associés à des zones mémoire physiques d'une mémoire, et puis, si nécessaire, de redéfinir des zones mémoire. Une deuxième fonctionnalité est de permettre de générer une liste de plages de mémoire associée à une application basée, en partie, sur une division physique d'une mémoire, puis d'optimiser cette liste de plages de mémoire virtuelles pour en limiter le nombre de plages.

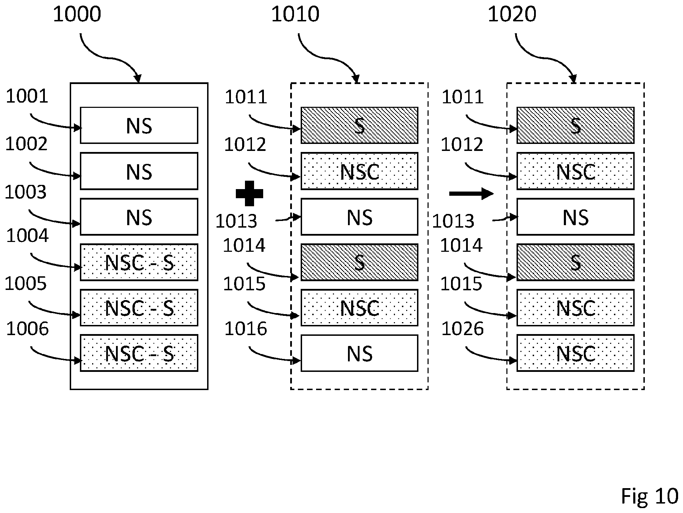

Pour mettre en oeuvre ces fonctionnalités, l'interface de configuration se base sur des valeurs d'un attribut de sécurité associé à chaque portion, partie ou zone mémoire, et à chaque ressource mémoire requises par l'application. Plus particulièrement, cet attribut de sécurité définit si une zone mémoire physique est sécurisée ou non sécurisée, et si une ressource mémoire d'une application est sécurisée, non sécurisée, ou non sécurisée appelable. L'attribut de sécurité est décrit plus en détails en relation avec la figure 10.

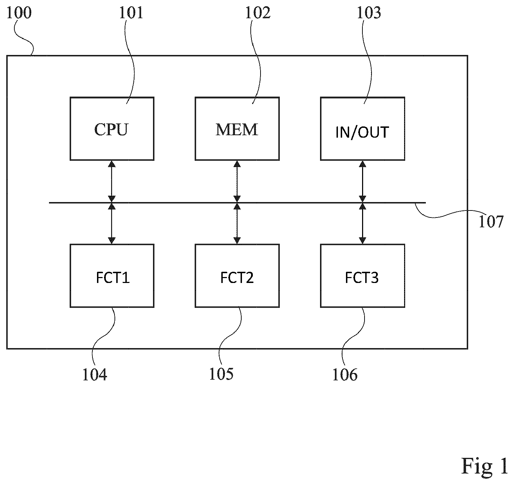

La figure 1 est un schéma bloc représentant, très schématiquement, une architecture d'un exemple d'un dispositif électronique 100 adapté à la mise en oeuvre d'une application logicielle.

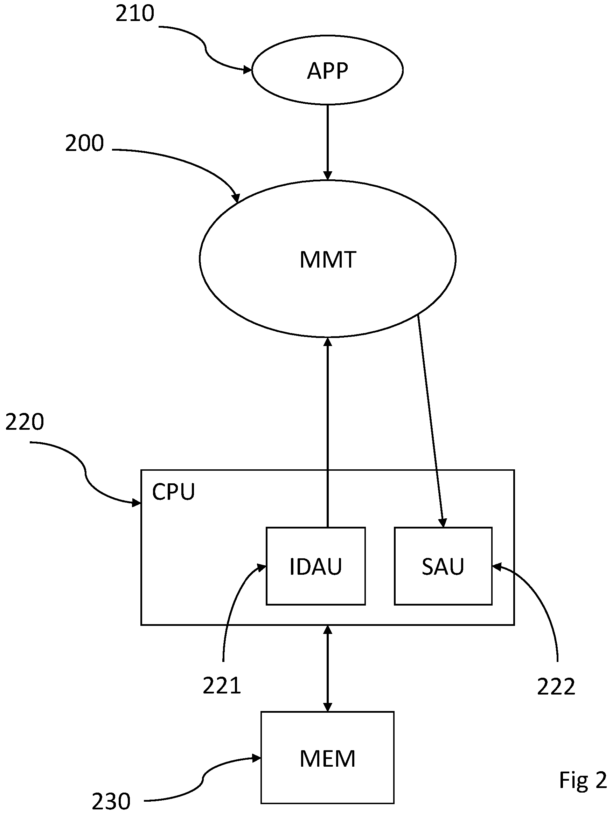

Le dispositif électronique 100 comprend, selon un mode de réalisation, un processeur 101 (CPU) adapté à mettre en oeuvre différents traitements de données stockées dans des mémoires et/ou fournies par d'autres circuits du dispositif 100. Selon un mode de réalisation, le processeur 101 est tout particulièrement adapté à mettre en oeuvre une ou plusieurs applications comme décrit en relation avec la figure 2.

Le dispositif électronique 100 comprend, en outre et selon un mode de réalisation, une ou plusieurs de mémoires 102 (MEM), par exemple des mémoires de différents types, parmi lesquelles, par exemple, une mémoire non volatile et/ou une mémoire volatile. Selon un mode de réalisation, ces mémoires sont adaptées à être utilisées par le processeur 101 et par la ou les applications qu'il met en oeuvre. Le traitement des mémoires par le processeur est décrit plus en détail en relation avec la figure 2.

Le dispositif électronique 100 comprend, en outre et selon un exemple, des circuits d'entrée/sortie 103 (IN/OUT) adaptés à mettre en oeuvre des communications de données et/ou d'énergie avec un utilisateur et/ou avec un ou plusieurs autres dispositifs électroniques.

Le dispositif électronique 100 peut comprendre, en outre, différents circuits 104 (FCT1), 105 (FCT2) et 106 (FCT3) adaptés à réaliser différentes fonctions. A titre d'exemple, les circuits 104, 105 et 106 peuvent comprendre des circuits de mesures, des circuits de conversion de données, des circuits de commande d'équipement électronique ou électromécanique, etc.

Le dispositif électronique 100 comprend, en outre, un ou plusieurs bus de données 107 adaptés à transférer des données entre ses différents composants.

La figure 2 représente, schématiquement et sous forme de blocs, une interface de configuration 200 (MMT), ou outil de configuration de mémoire 200, d'une application 210 (APP) adaptée à être exécutée par un processeur 220 (CPU) et utilisant une mémoire 230 (MEM).

Selon un mode de réalisation, l'application 210 est un logiciel informatique adapté à être mis en oeuvre par le processeur 210, et dont le fonctionnement utilise une ou plusieurs ressources matérielles gérées le processeur 220. Plus particulièrement, et selon un mode de réalisation, l'application 210 est adaptée à utiliser, au moins, des ressources mémoire gérées par le processeur 220, par exemple, pour y lire et/ou y stocker des données. On appelle ici ressource mémoire une partie de mémoire utilisée par l'application 210 pour lire et/ou écrire des données.

Selon un mode de réalisation, le processeur 220 est du type du processeur 101 décrit en relation avec la figure 1. Le processeur 220 est adapté à utiliser des ressources matérielles, comme une ou plusieurs mémoires ou d'autres composants et dispositifs électroniques, pour faire fonctionner l'application 210.

Selon un exemple, la mémoire 230 est une mémoire du type des mémoires 102 décrites en relation avec la figure 1. La mémoire 230 est constituée d'un ensemble de cellules mémoire associées chacune à une adresse. Un ensemble de cellule mémoires d'une mémoire, appelé ci-après portion mémoire ou zone mémoire, peut être défini par une liste d'adresses mémoire. La mémoire 230 est adaptée à communiquer avec le processeur 220.

Selon un mode de réalisation, pour gérer la mémoire 230, et, en particulier, les problématiques de sécurité liées à la mémoire 230, le processeur 220 comprend deux unités d'attribution de mémoire 221 (IDAU) et 222 (SAU).

L'unité d'attribution de mémoire 221 est une unité d'attribution de mémoire matérielle, appelée ci-après unité d'attribution matérielle 221, adaptée à diviser une mémoire en plusieurs zones mémoire, et à leur associer une valeur d'attribut de sécurité. L'unité 221 est appelée en anglais Implementation Defined Attribution Unit (IDAU), pour unité d'attribution définie par l'implémentation matérielle. Selon un exemple, l'unité 221 est un composant électronique faisant par du processeur 220. Le rôle de l'unité 221 est de diviser la mémoire 230 en plusieurs zones mémoire, c'est-à-dire en plusieurs ensembles de cellules mémoire. Cette division de la mémoire est appelée une division matérielle de la mémoire. Selon un mode de réalisation, chaque zone mémoire physique est définie par :
- une adresse de début ;
- une taille ;
- de façon optionnelle, une adresse de fin ; et
- par une valeur de l'attribut de sécurité.

On appelle ici adresse de début, l'adresse de la première cellule mémoire d'une zone de mémoire, c'est-à-dire l'adresse de la cellule mémoire de rang zéro dans la zone mémoire. De même, on appelle ici adresse de fin, l'adresse de la dernière cellule mémoire d'une zone de mémoire, c'est-à-dire l'adresse de la cellule mémoire de rang N-1 dans la zone mémoire, N étant un entier désignant la taille de la zone mémoire.

Concernant l'attribut de sécurité, chaque zone mémoire présente deux valeurs d'attribut de sécurité possibles. Une zone mémoire peut être sécurisée ou non sécurisée. Une zone mémoire sécurisée est une partie de mémoire dont les données sont considérées comme sécurisées. Autrement dit, les données stockées dans une partie sécurisée ne sont rendues accessibles qu'au processeur que lorsqu'il est dans un état sécurisé (S). Selon une autre définition, les données stockées dans une partie sécurisée ne sont accessibles qu'à une application sécurisée adaptée à mettre en oeuvre des transactions sécurisées. Une zone mémoire non sécurisée est une partie de mémoire dont les données sont considérées comme non sécurisées. Autrement dit, les données stockées dans une partie non sécurisée sont rendues accessibles au processeur, lorsqu'il est dans un état non-sécurisé (NS). Selon une autre définition, les données stockées dans une partie non sécurisée sont accessibles à toute application adaptée à mettre en oeuvre des transactions non sécurisées. Selon un exemple, pour des raisons de sécurité, toutes les zones mémoire d'une mémoire sont sécurisées par défaut, et certaines sont définies comme non sécurisées par la suite.

Selon un mode de réalisation préféré, chaque zone mémoire présente deux valeurs d'attribut de sécurité possible. Une zone mémoire peut être non sécurisée ou non sécurisée appelable. Une zone non sécurisée appelable est une zone sécurisée mais dont l'accès peut être donnée au processeur quand il est dans un mode non sécurisé. Lorsque le processeur fonctionne dans un mode non sécurisé, il ne peut accéder à une zone non sécurisée appelable que par l'utilisation d'une instruction sécurisée spécifique. Selon une autre définition, une partie non sécurisée appelable est une partie sécurisée, mais dans lesquelles des fonctions peut être appelées par des applications non sécurisées utilisant un canal de communication sécurisée adapté à transféré des instructions sécurisées, comme un portail sécurisée (SG, Secure Gateway).

L'unité d'attribution de mémoire 222 est une unité d'attribution de sécurité adaptée à diviser une mémoire en plusieurs plages de mémoire, et à leur associer à chacune un niveau de sécurité, ou une valeur d'attribut de sécurité. L'unité 222 est appelée en anglais Security Attribution Unit (SAU), pour unité d'attribution de sécurité. Selon un exemple, l'unité 222 est un composant électronique faisant par du processeur 220. Les données permettant de configurer une plage mémoire sont stockées dans des registre de l'unité d'attribution de mémoire 222.

Selon un mode de réalisation, chaque plage de mémoire présente trois niveaux de sécurité possibles. Selon un mode de réalisation, une plage de mémoire peut être sécurisée, non sécurisée, ou non sécurisée appelable. Ainsi, une plage de mémoire définie par l'unité 222 comprend un niveau de sécurité supplémentaire par comparaison avec une zone mémoire définie par l'unité 221 qui ne peut comprendre que deux valeurs d'attribut de sécurité différentes. Une plage mémoire sécurisée présente les mêmes caractéristiques qu'une zone mémoire physique sécurisée. Une plage de mémoire non sécurisée présente les mêmes caractéristiques qu'une zone mémoire physique non sécurisée. Une plage de mémoire non sécurisée appelable présente les mêmes caractéristiques qu'une zone mémoire physique non sécurisée appelable.

Selon un mode de réalisation, l'unité 222 est adaptée à mettre à disposition un nombre fini de plages de mémoire. Selon un exemple, l'unité 222 est adaptée à mettre à disposition huit plages de mémoire. Si les plages de mémoire mises à disposition par l'unité 222 ne couvrent pas toutes la mémoire 230, les plages de mémoire qui ne sont pas couvertes ont un niveau de sécurité égal à sécurisé.

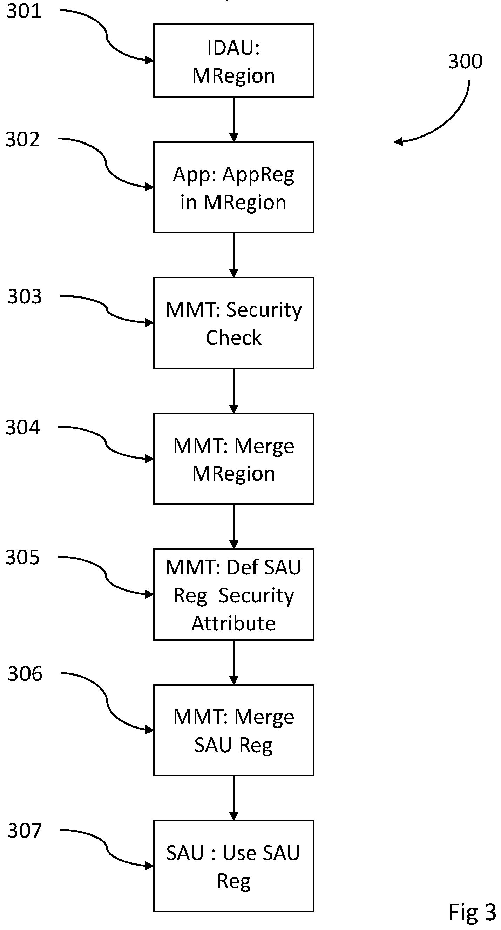

l'interface de configuration 200 est un outil logiciel permettant de réaliser la configuration de ressources matérielles, et en particulier de ressources mémoire, gérées par le processeur 220 pour leurs utilisations par l'application 210. Pour cela, l'interface de configuration 200 est configurée pour recevoir des informations de la part de l'application 210, et de la part du processeur 220, et en particulier de la part de l'unité 221. L'interface de configuration 200 est, en outre, adaptée à fournir des données de configuration à l'unité 222. L'interface de configuration 200 est tout particulièrement adaptée à se baser sur une division de la mémoire 230 en zone mémoire, réalisée par l'unité 221, puis à fournir des données de configuration pour obtenir les plages de mémoire définies par l'unité 222, en fonction des ressources mémoire nécessaires au fonctionnement de l'application 210. L'interface de configuration 200 permet, entre autres, d'optimiser le nombre de plages mémoire et de modifier leurs valeurs d'attribut de sécurité. L'interface de configuration 200 est, en outre, tout particulièrement adaptée à permettre au concepteur de l'application de modifier les ressources mémoire utilisées par l'application 210, en modifiant les valeurs de leurs attributs de sécurité. Le fonctionnement de l'interface de configuration 200 est décrit plus en détail en relation avec les figures 3 à 12.

La figure 3 est un schéma bloc illustrant un mode de mise en oeuvre d'un procédé de configuration 300 d'une application, et plus particulièrement un procédé de configuration de zones mémoire d'une mémoire et de ressources mémoire utilisées par une application, ce procédé 300 étant mis en oeuvre par l'interface de configuration 200 (MMT), l'application 210 (APP), et le processeur 220 (CPU), tous décrits en relation avec la figure 2.

A une étape 301 (IDAU: MRegion), le processeur 220 utilise l'unité d'attribution matérielle 221 est mise en oeuvre pour diviser, de façon matérielle, une mémoire en plusieurs zones mémoire. Comme décrit précédemment, chaque zone mémoire est, en outre, définie par une adresse de début, une taille, une valeur d'un attribut de sécurité, et, selon un exemple, une adresse de fin.

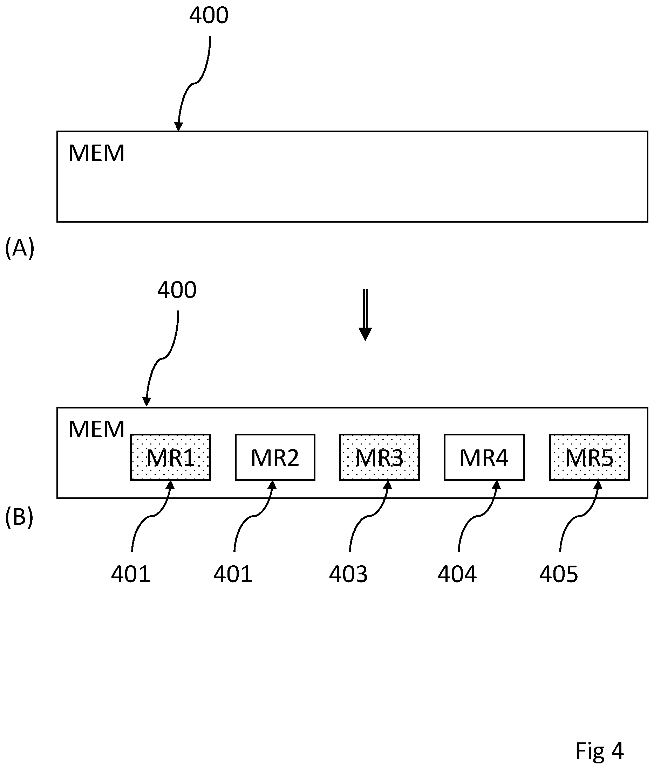

L'unité d'attribution matérielle 221 fournit, en fin d'étape 301, une liste de groupes de données représentant chacun une zone mémoire. Cette liste représente une division matérielle de la mémoire 230. Sur la base de cette division matérielle de la mémoire 230, l'interface de configuration 200 construit une deuxième liste en replaçant les zone mémoire non sécurisée appelable par des zones sécurisées pour faciliter l'expérience utilisateur. Cette deuxième liste est construite par l'inferface de configuration 200 et est désignée ci-après comme la division primaire de la mémoire. L'étape 301 est décrite plus en détails en relation avec la figure 4.

A une étape 302 (App: AppReg in MRegion), successive à l'étape 301, un concepteur de l'application 210 établit une liste de ressources mémoire dont l'application 210 a besoin pour fonctionner. Chaque ressource mémoire est caractérisé par une valeur d'un attribut de sécurité.

Selon un mode de réalisation, chaque ressource mémoire présente trois niveaux de sécurité possibles. Selon un mode de réalisation, une ressource mémoire peut être sécurisée, non sécurisée, ou non sécurisée appelable. Une ressource mémoire sécurisée présente les mêmes caractéristiques qu'une plage mémoire sécurisée ou qu'une zone mémoire physique sécurisée. Une ressource mémoire non sécurisée présente les mêmes caractéristiques qu'une plage mémoire non sécurisée ou qu'une zone mémoire physique non sécurisée. Une ressource mémoire non sécurisée appelable présente les mêmes caractéristiques qu'une plage mémoire non sécurisée appelable ou qu'une zone mémoire physique non sécurisée appelable. Le niveau de sécurité d'une partie de mémoire est gardé identique à celui de la ressource mémoire qui lui est associée, par exemple en modifiant le niveau de sécurité d'une partie de mémoire, et ou en allouant une autre ressource mémoire à une partie de mémoire pour faire coïncider les niveaux de sécurité.

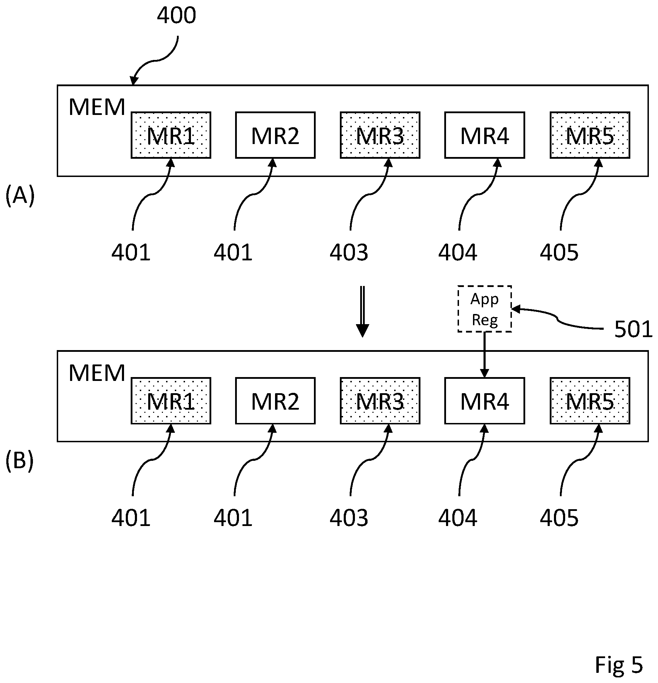

Le concepteur de l'application 210 déclare, ensuite, les emplacements de ces ressources mémoire dans les zones mémoire définies par l'unité d'attribution matérielle 221 à l'étape 301, en utilisant la division primaire définie précédemment. Autrement dit, le concepteur de l'application 210 choisit, pour chaque ressource mémoire, la zone mémoire physique dans laquelle la ressource mémoire est placée. Selon un exemple, si le concepteur connait la valeur de l'attribut de sécurité d'une ressource mémoire, il peut choisir une zone mémoire ayant cette valeur d'attribut de sécurité. La mise en oeuvre de l'étape 302 est décrite en relation avec la figure 5.

A une étape 303 (MMT: Security Check), successive à l'étape 302, une fois que la déclaration de tous les emplacements des ressources mémoire de l'application 210 est terminée, le concepteur peut décider, selon un mode de réalisation, de modifier les valeurs des attributs de sécurité des ressources mémoire dans les différentes zone mémoire. Pour réaliser cette étape, le concepteur de l'application utilise l'interface de configuration 200.

A une étape 304 (MMT: Merge MRegion), successive à l'étape 303, une fois toutes les modifications effectuées à l'étape 303, l'interface de configuration 200 fusionne les zones mémoire contiguës de même valeur d'attribut de sécurité pour obtenir une nouvelle division de la mémoire. Plus particulièrement, l'interface de configuration 200 fusionne deux zones mémoire si elles partagent le même attribut de sécurité et si elles sont contiguës. De même, l'interface de configuration 200 fusionne deux zones/parties mémoire si elles partagent le même attribut de sécurité et si elles sont contiguës. De plus, l'interface de configuration 200 fusionne deux zones/parties de mémoire si l'une est non sécurisée et l'autre est appelable non sécurisée et est également située dans une zone appelable non sécurisée dans la division matérielle de la mémoire. La ressource mémoire appelable sécurisée est strictement contiguë à la zone mémoire non sécurisée ou séparée par une zone mémoire réservée matérielle.

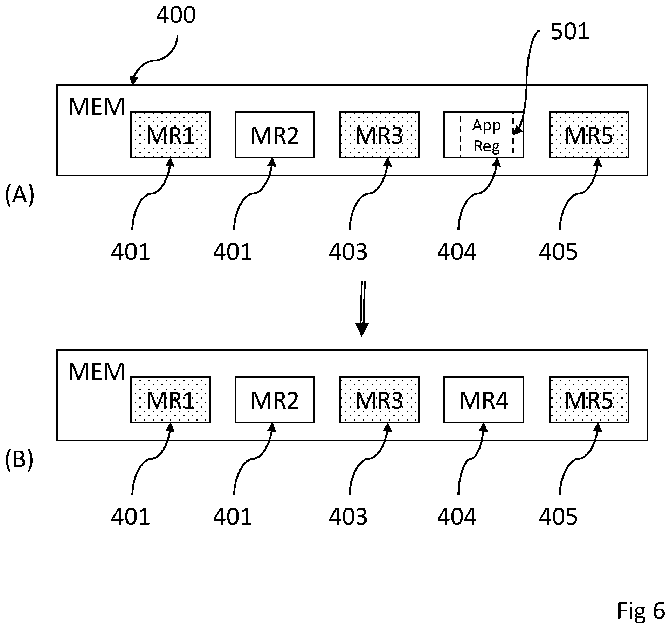

Cette division obtenue à l'étape 304 est désignée ci-après comme la division secondaire de la mémoire. Cette étape est décrite plus en détail en relation avec les figures 6 à 8.

Plus particulièrement, deux ressources mémoire sont considérées par l'interface de configuration 200 comme contiguës :
- si elles sont effectivement contiguës ;
- si elles sont séparées par une zone mémoire réservée matériellement inutilisable et à laquelle tout accès générant une erreur de bus ; ou
- si elles se trouvent dans une même zone mémoire aliasée.

La définition d'une zone mémoire aliasée est la suivante. Une zone de mémoire aliasée est une zone de mémoire dans laquelle les mémoires physiques sont reliées à au moins deux zones de mémoire différentes du point de vue du processeur.

De même, deux zones mémoire ou parties mémoire sont considérées par l'interface de configuration 200 comme contiguës :
- si leurs ressources mémoire frontières respectives sont contiguës ; ou
- si l'un d'entre eux ne contient aucune ressource mémoire.

Dans une zone mémoire aliasée, l'interface de configuration 200 impose à la ressource mémoire d'avoir le même attribut de sécurité que la zone mémoire où elle se trouve dans la division matérielle de la mémoire. Autrement dit, si le concepteur de l'application change l'attribut de sécurité d'une ressource mémoire dans une zone mémoire aliasée, l'interface de configuration 200 déplace les ressources mémoire vers la zone mémoire du nouvel attribut de sécurité, cette zone mémoire pointant vers le même alias physique. mémoire.

La division secondaire de la mémoire n'est utilisée que par l'interface de configuration 200 pour la suite du procédé de configuration, et n'est pas transmise à l'unité 221.

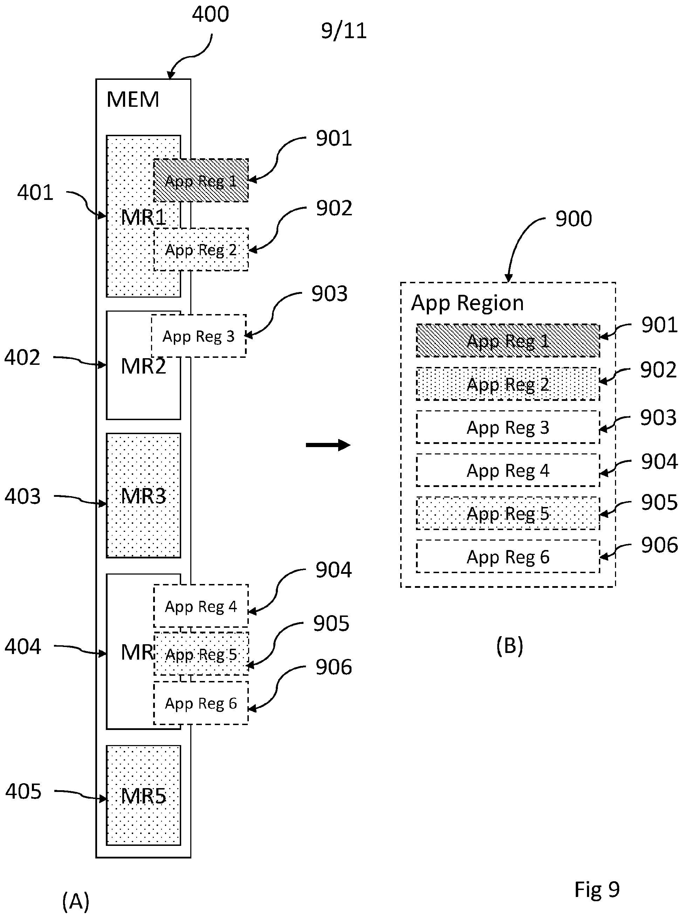

A une étape 305 (MMT: Def SAU Region), successive à l'étape 304, la division secondaire de la mémoire en zones mémoire est prête, il est alors possible de constituer un ensemble de données représentant une mémoire virtuelle associée à l'application 210 en se basant sur la division secondaire de la mémoire et l'emplacement des ressources mémoire utilisées de l'application 210. On appelle ici mémoire virtuelle associée à l'application 210, l'ensemble des zones mémoire occupées par une ressource mémoire de l'application 210. L'interface 200 génère donc à l'étape 305 un ensemble de données représentant la mémoire virtuelle primaire à partir de la division secondaire de la mémoire, et à partir des emplacements des ressources mémoire déclarées de l'application 210. Cette étape est décrite plus en détail en relation avec les figures 9 et 10.

Selon un exemple, le concepteur peut décider de modifier les valeurs des attributs de sécurité des ressources mémoire dans les différentes zones mémoire à l'étape 305. Pour réaliser cette étape, le concepteur de l'application utilise l'interface de configuration 200.

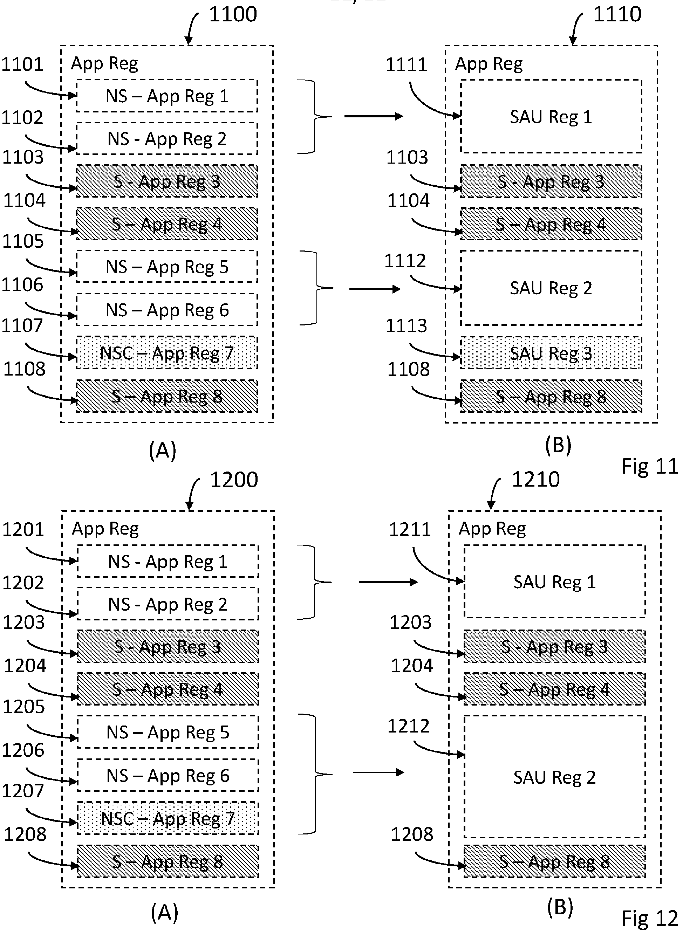

A une étape 306 (MMT: Merge SAU Reg), successive à l'étape 305, une fois que les données représentant la mémoire virtuelle primaire est prête, l'interface de configuration 200 fusionne les zones mémoire comprenant des ressources mémoire contiguës de même valeur d'attribut de sécurité pour obtenir un ensemble de données représentant une nouvelle mémoire virtuelle, appelée ci-après mémoire virtuelle secondaire, comprenant des ressources mémoires virtuelles. On dit ici que deux ressources mémoire sont contiguës si elles sont effectivement contigües, ou si elle ne sont séparées que par des ressources mémoire qui ne sont pas utilisées par l'application 210. Plus particulièrement, deux ressources mémoire sont dites contiguës : si elles sont effectivement contiguës ; soit elles sont situées dans une zone mémoire aliasée et elles sont séparées uniquement par des ressources mémoire qui ne sont pas utilisées par l'application 210. Les zones mémoire pointées vers le même dispositif de mémoire physique sont appelées zone mémoire aliasée. Pour les zones de mémoire avec alias, l'interface de configuration 200 impose une règle selon laquelle la zone de mémoire non sécurisée avec alias ne peut héberger que des ressources de mémoire non sécurisées. Et le mécanisme matériel de sécurité du processeur ne permet pas aux zones mémoire appelables non sécurisées et aux zones mémoire sécurisées d'héberger une quelconque ressource mémoire non sécurisée, autrement dit elles ne peuvent héberger qu'une ressource mémoire appelable non sécurisée ou une ressource mémoire sécurisée. Selon un mode de réalisation, l'interface de configuration fusionne entre elles seulement les zones mémoire comprenant des ressources contiguës ayant pour valeur d'attribut de sécurité, la valeur "non sécurisée" et/ou la valeur "non sécurisée appelable". Cette étape est décrite plus en détail en relation avec les figures 11 et 12.

A une étape 307 (SAU: Use SAU Reg), successive à l'étape 306, les données représentant la mémoire virtuelle secondaire sont prêtes, l'interface de configuration 200 envoie ces données à l'unité d'attribution logiciel 222 pour qu'il génère cette mémoire virtuelle secondaire, et plus particulièrement les plages de mémoire qui constitue la mémoire virtuelle secondaire. Plus particulièrement, ces données représentant la mémoire virtuelle secondaire sont des données adaptées à être stockées dans des registres. Ces données sont, par exemple, des adresses mémoire et des données représentant des valeurs d'attribut de sécurité.

Selon un mode de réalisation, le procédé de configuration 300 est adapté à être mis en oeuvre par un moyen non transitoire lisible par ordinateur.

La figure 4 représente, plus en détails, un exemple de mise en oeuvre de l'étape 301 décrite en relation avec la figure 3.

A un stade (A) initial de l'étape 301, on considère une mémoire 400 (MEM) qui n'a pas été divisée par l'unité d'attribution matérielle. Cette mémoire est vue par le processeur 220 comme une seule grande zone mémoire.

Pour arriver à un stade (B) finale de l'étape 301, l'unité d'attribution 221 a réalisé une division de la mémoire 400 en des zones mémoire 401 (MR1), 402 (MR2), 403 (MR3), 404 (MR4), et 405 (MR5). Les zones mémoire 401 à 405 peuvent être de tailles identiques ou différentes. Pour cela, les cellules mémoire dont la valeur de l'attribut de sécurité est identique sont réunies en une même zone. Pour rappel, la valeur de l'attribut de sécurité d'une zone mémoire peut être sécurisée ou non sécurisée, ou selon le mode de réalisation préféré, non sécurisée ou non sécurisée appelable.

L'unité d'attribution 221 établit une liste comprend des groupes de données définissant les zones mémoire, et la fournit au processeur 220. Le processeur 220 utilise cette liste lors de ses accès en mémoire. Comme dit précédemment, cette liste représente la division primaire de la mémoire en zones mémoire.

Selon le mode de réalisation préféré décrit précédemment, l'unité d'attribution 221 ne peut définir la valeur de l'attribut de sécurité d'une zone mémoire comme non sécurisée ou non sécurisée appelable. A l'état final de l'étape 301, une zone mémoire non sécurisée appelable est perçue par un concepteur d'application comme une zone sécurisée grâce à l'interface de configuration 200. L'interface de configuration 200 considère les zones non sécurisées appelables de la division primaire comme des zones sécurisées à l'étape finale de l'étape 301.

Ainsi, en phase (B) de l'étape 301, les zones 401, 403 et 405 sont des zones non sécurisées appelables, et les zones 402 et 404 sont des zones non sécurisées.

La figure 5 représente, plus en détails, un exemple de mise en oeuvre de l'étape 302 décrite en relation avec la figure 3.

A un stade (A) initial de l'étape 302, correspondant au stade (B) de l'étape 301 décrit en relation avec la figure 5, le concepteur de l'application 210 utilise l'interface de configuration 200 pour configurer les ressources mémoire de l'application 210. L'unité d'attribution 221 fournit, à l'interface de configuration 200, la liste représentant la division primaire de la mémoire 400. Ainsi, comme en figure 4, la mémoire 400 a été divisée en cinq zones mémoire 401 à 405.

A un stade (B) final de l'étape 302, le concepteur déclare les emplacements des ressources mémoire de l'application dans les zones mémoire 401 à 405. En figure 5, il est considéré qu'une ressource mémoire 501 (App Reg) de l'application 210 doit être placée dans la zone mémoire 404. Généralement, le concepteur utilise l'interface de configuration pour placer chaque ressource mémoire dans une zone mémoire de même valeur d'attribut de sécurité.

La figure 6 représente, plus en détails, un premier cas d'application de la mise en oeuvre de l'étape 304 décrite en relation avec la figure 3.

Pendant l'étape 303, en utilisant l'interface 200, le concepteur de l'application 210 a eu la possibilité de modifier, les valeurs d'attribut de sécurité associées à chaque ressource mémoire de l'application 210.

A un stade (A) initial de l'étape 304, la ressource mémoire 501 est une ressource mémoire non sécurisée, mais est toujours placée dans une zone mémoire non sécurisée.

A un stade (B) final de l'étape 304, l'interface de configuration mémoire 200 essaye d'optimiser le nombre de zones mémoire, en fusionnant les zones mémoire contiguës de même valeur d'attribut de sécurité pour obtenir la division secondaire de la mémoire 230. Ici toutes les zones mémoire contiguës de même valeur d'attribut de sécurité sont déjà fusionnées, la division secondaire de la mémoire reste identique à la division primaire définie par l'unité d'attribution matérielle 221.

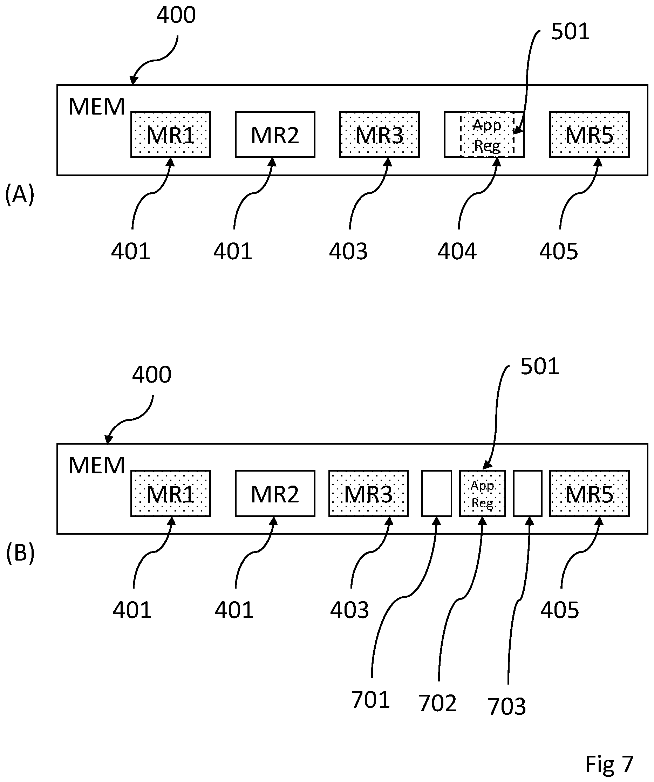

La figure 7 représente, plus en détails, un deuxième cas d'application de la mise en oeuvre de l'étape 304 décrite en relation avec la figure 3.

A un stade (A) initial de l'étape 304, la ressource mémoire 501 est devenue une ressource non sécurisée appelable, et a été placée dans une zone mémoire non sécurisée.

A un stade (B) final de l'étape 304, l'interface de configuration mémoire 200 définit la division secondaire de la mémoire en se basant sur les valeurs des attributs de mémoire définies au stade (A). Ainsi, dépendant du placement de la ressource mémoire 501 dans la zone mémoire 404, la zone 404 est divisée en deux ou trois zones mémoire. En figure 7, on considère que la zone mémoire 404 est divisée en trois zones mémoire 701, 702 et 703, les zones 701 et 703 étant des zones mémoire non sécurisées, et la zone mémoire 702 étant une zone mémoire non sécurisée appelable. La ressource mémoire 501 étant placée dans la zone mémoire 702.

La division secondaire de la mémoire 400 est, dans ce cas, différent à la division primaire établie par l'unité d'attribution matérielle 221.

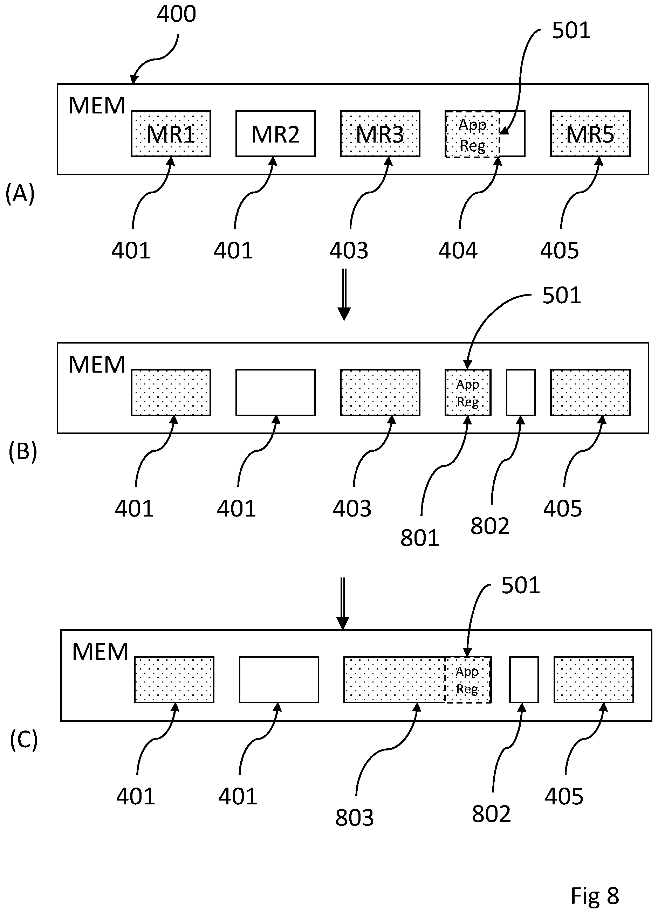

La figure 8 représente, plus en détails, un troisième cas d'application de la mise en oeuvre de l'étape 304 décrite en relation avec la figure 3.

A un stade (A) initial de l'étape 304, comme en figure 7, la ressource mémoire 501 est devenue une ressource non sécurisée appelable, et a été placée dans une zone mémoire non sécurisée.

A un stade (B) de l'étape 304, l'interface de configuration mémoire 200 définit la division secondaire de la mémoire en se basant sur les valeurs des attributs de mémoire définies au stade (A). Ainsi, dépendant le placement de la ressource mémoire 501 dans la zone mémoire 404, la zone 404 est divisée en deux ou trois zones mémoire. En figure 8, on considère que la zone mémoire 404 est divisée en deux zones mémoire 801 et 802, la zone 801 étant une zone mémoire non sécurisée appelable, et la zone mémoire 802 étant une zone mémoire non sécurisée. La ressource mémoire 501 est placée ou déclarée dans la zone mémoire 801.

A un stade (C) final de l'étape 304, l'interface de configuration mémoire 200 définit la division secondaire de la mémoire en fusionnant les parties de mémoire contiguës ayant la même valeur de l'attribut de sécurité. C'est le cas ici pour les zones mémoire 403 et 801 qui sont toutes les deux des zones mémoire non sécurisées appelables, elles sont alors fusionnées en une zone mémoire 803. La ressource mémoire 501 est donc placée dans la zone mémoire 803.

La division secondaire de la mémoire 400 est, dans ce cas, différent à la division primaire établie par l'unité d'attribution matérielle 221.

La figure 9 représente, plus en détails, un exemple de mise en oeuvre de l'étape 305 décrite en relation avec la figure 3.

A un stade (A) initial de l'étape 305, l'interface 200 a, à sa disposition, les données représentant la division secondaire de la mémoire, ainsi que celles représentant la répartition des ressources mémoires déclarées de l'application 210 dans les zones mémoire de la mémoire 230.

Ainsi en figure 9, les ressources mémoire de l'application 210 sont les suivantes :
- une ressource mémoire 901 (App Reg 1) sécurisée, disposée dans la zone mémoire 401 non sécurisée appelable ;
- une ressource mémoire 902 (App Reg 2) non sécurisée appelable, disposée dans la zone mémoire 401 non sécurisée appelable ;
- une ressource mémoire 903 (App Reg 3) non sécurisée, disposée dans la zone mémoire 402 non sécurisée ;
- une ressource mémoire 904 (App Reg 4) non sécurisée, disposée dans la zone mémoire 404 non sécurisée ;
- une ressource mémoire 905 (App Reg 5) non sécurisée, disposée dans la zone mémoire 404 non sécurisée ; et
- une ressource mémoire 906 (App Reg 6) non sécurisée, disposée dans la zone mémoire 404 non sécurisée.

Selon un mode de réalisation, la valeur de l'attribut de sécurité des ressources mémoire peut être modifiée en fonction de la valeur de l'attribut mémoire de la zone mémoire dans laquelle la ressource mémoire est placée. Les règles d'adaptation de ces valeurs sont décrites en relation avec la figure 10.

A un stade (B) final de l'étape 305, les données représentant une mémoire virtuelle primaire 900 (App Region) associée à l'application 210 sont générées. Cette mémoire virtuelle primaire 900 comprends les ressources mémoire 901 à 906. Pour la mémoire, une mémoire virtuelle associée à l'application est un ensemble de valeurs de données basées sur la division secondaire de la mémoire et sur la position des ressources mémoire utilisées pour l'application. Cette mémoire virtuelle est générée par l'interface 200.

La figure 10 représente, très schématiquement et sous forme de blocs, les règles d'adaptation des valeurs des attributs de sécurité de ressources mémoire d'une application en fonction de la valeur de l'attribut de sécurité de zones mémoire dans laquelle elles sont placées.

En figure 10 est représentée une mémoire physique 1000 divisée en six zones mémoire 1001 (NS), 1002 (NS), 1003 (NS), 1004 (NSC-S), 1005 (NSC-S), et 1006 (NSC-S). Les zones mémoire 1001 à 1003 sont des zones mémoire non sécurisées et les zones mémoire 1004 à 1006 sont, selon le mode de réalisation préféré, des zones mémoire non sécurisées appelables.

Est représentée, en outre en figure 10, une liste 1010 de six ressources mémoire 1011 (S), 1012 (NSC), 1013 (NS), 1014 (S), 1015 (NSC), et 1016 (NS) d'une application, adaptée chacune à être disposée dans une des zones mémoires 1001 à 1006. Chaque ressource mémoire 1011 à 1016 comprend une valeur d'attribut correspondant à la valeur d'attribut souhaité par le concepteur de l'application. Plus particulièrement, les ressources mémoire 1011 et 1014 sont des ressources mémoire sécurisées, les ressources mémoire 1012 et 1015 sont des ressources mémoire non sécurisées appelables, et les ressources mémoire 1013 et 1016 sont des ressources mémoire non sécurisées.

Dans l'exemple de la figure 10 :
- la ressource mémoire 1011 est placée dans la zone mémoire 1001 ;
- la ressource mémoire 1012 est placée dans la zone mémoire 1002 ;
- la ressource mémoire 1013 est placée dans la zone mémoire 1003 ;
- la ressource mémoire 1014 est placée dans la zone mémoire 1004 ;
- la ressource mémoire 1015 est placée dans la zone mémoire 1005 ; et
- la ressource mémoire 1016 est placée dans la zone mémoire 1006.

En figure 10, est représenté, en outre, une liste 1020 correspondant à la liste finale fournie par l'interface 200 à l'unité 222 une fois que les valeurs des attributs de sécurité des zones mémoire et les valeurs des attributs de sécurité des ressources mémoire ont été combinées.

Si une ressource mémoire non sécurisée est placée dans une zone mémoire non sécurisée appelable, alors la ressource mémoire devient non sécurisée appelable. Si une ressource mémoire non sécurisée appelable est placée dans une zone mémoire non sécurisée, alors la ressource mémoire reste non sécurisée appelable.

Selon un mode de réalisation préféré, l'interface 200 peut interdire le placement d'une ressource mémoire non sécurisée dans une zone mémoire non sécurisée appelable.

Ainsi, la liste de ressources mémoire 1020 modifiée peut être générée par l'interface 200, et comprend :
- la ressource mémoire 1011 sécurisée ;
- la ressource mémoire 1012 non sécurisée appelable ;
- la ressource mémoire 1013 non sécurisée ;
- la ressource mémoire 1014 sécurisée ;
- la ressource mémoire 1015 non sécurisée appelable ; et
- une ressource mémoire 1026 non sécurisée appelable.

La figure 11 représente, très schématiquement et sous forme de blocs, un premier mode de mise en oeuvre des étapes 302 à 306 décrites en relation avec la figure 3.

On considère une liste de ressources mémoire 1100 (App Reg). La liste 1100 comprend huit parties mémoire 1101 (NS - App Reg 1), 1102 (NS - App Reg 2), 1103 (S - App Reg 3), 1104 (S - App Reg 4), 1105 (NS - App Reg 5), 1106 (NS - App Reg 6), 1107 (NSC - App Reg 7) et 1108 (S - App Reg 8), parmi lesquelles :
- les parties 1101, 1102, 1105 et 1106 sont non sécurisées ;
- les parties 1103, 1104 et 1108 sont sécurisées ; et
- la partie 1107 est non sécurisée appelable.

La phase (A) représente la liste 1100 représentant les données permettant d'obtenir une mémoire virtuelle primaire associée à l'application 210.

La phase (B) représente une liste 1110 représentant des données permettant d'obtenir une mémoire virtuelle secondaire associée à l'application 210. Autrement dit, en phase (B), certaines ressources mémoire ont été fusionnées. En particulier, les parties de mémoire 1101 et 1102 étant contiguës et toutes les deux des parties de mémoire non sécurisées, elles ont été fusionnées en une partie de mémoire 1111 non sécurisée. De même, les parties de mémoire 1105 et 1106 étant contiguës et toutes les deux étant des parties de mémoire non sécurisées, elles ont été fusionnées en une partie de mémoire 1112 non sécurisée.

Ainsi, en fin d'étape 306, la mémoire virtuelle secondaire associée à l'application présente un nombre de ressources mémoire moindre en comparaison avec la mémoire virtuelle primaire non optimisée.

La figure 12 représente, très schématiquement et sous forme de blocs, un deuxième mode de mise en oeuvre des étapes 302 à 306 décrites en relation avec la figure 3.

On considère une liste de ressources mémoire 1200 (App Reg). La liste 1200 comprend huit parties mémoire 1201 (NS - App Reg 1), 1202 (NS - App Reg 2), 1203 (S - App Reg 3), 1204 (S - App Reg 4), 1205 (NS - App Reg 5), 1206 (NS - App Reg 6), 1207 (NSC - App Reg 7) et 1208 (S - App Reg 8), parmi lesquelles :
- les parties 1201, 1202, 1205 et 1206 sont non sécurisées ;
- les parties 1203, 1204 et 1208 sont sécurisées ; et
- la partie 1207 est non sécurisée appelable.

La phase (A) représente la liste 1200 représentant les données permettant d'obtenir une mémoire virtuelle primaire associée à l'application 210.

La phase (B) représente une liste 1210 représentant des données permettant d'obtenir une mémoire virtuelle secondaire associée à l'application 210. Autrement dit, en phase (B), certaines ressources mémoire ont été fusionnées. En particulier, les ressources mémoire 1201 et 1202 étant contiguës et toutes les deux des parties de mémoire non sécurisées, elles ont été fusionnées en une plage mémoire 1211 (SAU Reg 1) non sécurisée. La définition du mot contiguës est celle donnée précédemment.

De plus, et selon une variante par rapport au mode de réalisation décrit en relation avec la figure 11, il est considéré ici que si une ressource mémoire non sécurisée appelable est strictement contiguë avec une zone ou partie de mémoire non sécurisée, et si cette ressource mémoire non sécurisée appelable est placée dans une zone mémoire considéré comme non sécurisée appelable selon la division primaire de la mémoire, alors les deux parties de mémoire peuvent être fusionnées en une partie de mémoire non sécurisée. Ainsi, les parties de mémoire 1205, 1206 et 1207 sont fusionnées en une partie de mémoire 1212 (SAU Reg 2) non sécurisée.

Ainsi, en fin d'étape 306, la mémoire virtuelle secondaire associée à l'application présente un nombre de ressources mémoire moindre en comparaison avec la mémoire virtuelle primaire non optimisée.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Selon un un mode de réalisation, si la valeur de l'attribut de la première partie (1206) est égale à non sécurisée, et si la valeur de l'attribut de la deuxième partie (1207) est égale à non sécurisée appelable, et si la seconde la partie (1207) est située dans une zone mémoire considérée comme non sécurisée appelable par la première division mémoire, et la deuxième partie (1207) est strictement contiguë à la première partie (1206), alors lesdites au moins deux première et deuxième parties ( 1206, 1207) sont fusionnés dans la troisième partie (1212) et la valeur de l'attribut de la troisième partie (1212) est égale à non sécurisé.

Enfin, la mise en oeuvre pratique des modes de réalisation décrits est à la portée de la personne du métier à partir des indications fonctionnelles données ci-dessus.

## Revendications

1. Procédé de configuration (300) d'une mémoire (230) pour l'exécution d'une application (210) adaptée à être exécutée par un processeur (101 ; 220) et utilisant au moins deux première et deuxième ressources mémoire contiguës (401 à 405 ; 901 à 906 ; 1101 à 1108 ; 1201 à 1208) associées à une application et placées dans au moins une zone mémoire (401 à 405) de la mémoire (102 ; 230 ; 400 ; 900 ; 1100 ; 1200),
dans lequel ledit procédé (300) comprend une étape de fusion (306) desdites au moins deux première et deuxième ressources mémoire (901 à 906 ; 1101 à 1108 ; 1201 à 1208) en une troisième ressources mémoire (803 ; 1111, 1112 ; 1211, 1212), si lesdites au moins deux première et deuxième ressources mémoires (901 à 906 ; 1101 à 1108 ; 1201 à 1208) ont une même valeur d'un attribut de sécurité,
le procédé comprenant, en outre, une étape de génération (307) de données de configuration de plages mémoire de la mémoire (102 ; 230 ; 400 ; 900 ; 1100 ; 1200),
dans lequel ladite valeur dudit attribut de sécurité désigne le niveau de sécurité d'une portion (401 à 405 ; 901 à 906 ; 1101 à 1108 ; 1201 à 1208) de la mémoire (102 ; 230 ; 400 ; 900 ; 1100 ; 1200),
dans lequel ladite valeur dudit attribut d'une ressource mémoire (901 à 906 ; 1101 à 1108 ; 1201 à 1208) de ladite application (210) peut être égale à :
- sécurisée ;
- non sécurisée ; et
- non sécurisée appelable,
dans lequel si la valeur de l'attribut de la première portion (1206) est égale à non sécurisée, et que la valeur de l'attribut de la deuxième portion (1207) est égale à non sécurisée appelable, et que la deuxième portion (1206) est placée dans une zone mémoire dont la valeur de l'attribut est égale à non sécurisé appelable, alors lesdites au moins deux première et deuxième portions (1206, 11207) sont fusionnées en la troisième portion (1212), et la valeur de l'attribut de la troisième portion (1212) est égale à non sécurisée.

2. Dispositif (100) comprenant une interface de configuration (200) adaptée à mettre en oeuvre un procédé de configuration (300) d'une mémoire (230) pour l'exécution d'une application (210) adaptée à être exécutée par un processeur (101 ; 220) et utilisant au moins deux première et deuxième ressources mémoire contiguës (401 à 405 ; 901 à 906 ; 1101 à 1108 ; 1201 à 1208) associées à une application et placées dans au moins une zone mémoire (401 à 405) d'au moins une mémoire (102 ; 230 ; 400 ; 900 ; 1100 ; 1200),
dans lequel ledit procédé (300) comprend une étape de fusion (306) desdites au moins deux première et deuxième ressources mémoire (901 à 906 ; 1101 à 1108 ; 1201 à 1208) en une troisième ressources mémoire (803 ; 1111, 1112 ; 1211, 1212), si lesdites au moins deux première et deuxième portions (901 à 906 ; 1101 à 1108 ; 1201 à 1208) ont une même valeur d'un attribut de sécurité,
le procédé comprenant, en outre, une étape de génération (307) de données de configuration de plages mémoire de la mémoire (102 ; 230 ; 400 ; 900 ; 1100 ; 1200),
dans lequel ladite valeur dudit attribut de sécurité désigne le niveau de sécurité d'une portion (401 à 405 ; 901 à 906 ; 1101 à 1108 ; 1201 à 1208) de la mémoire (102 ; 230 ; 400 ; 900 ; 1100 ; 1200),
**caractérisé en ce que**
ladite valeur dudit attribut d'une ressource mémoire (901 à 906 ; 1101 à 1108 ; 1201 à 1208) de ladite application (210) peut être égale à :
- sécurisée ;
- non sécurisée ; et
- non sécurisée appelable,
dans lequel si la valeur de l'attribut de la première portion (1206) est égale à non sécurisée, et que la valeur de l'attribut de la deuxième portion (1207) est égale à non sécurisée appelable, et que la deuxième portion (1206) est placée dans une zone mémoire dont la valeur de l'attribut est égale à non sécurisé appelable, alors lesdites au moins deux première et deuxième portions (1206, 11207) sont fusionnées en la troisième portion (1212), et la valeur de l'attribut de la troisième portion (1212) est égale à non sécurisée,
ledit dispositif comprenant, en outre, ledit processeur (101 ; 220) adapté à mettre en oeuvre l'application (210), et ladite au moins une mémoire (102 ; 230 ; 400 ; 900 ; 1100 ; 1200).

3. Un moyen non transitoire lisible par ordinateur comprenant des instructions de programme adaptées, lorsque ces instructions sont exécutées par l'ordinateur, à mettre en oeuvre le procédé selon la revendication 1.

## Patentansprüche

1. Verfahren zum Konfigurieren (300) eines Speichers (230) zum Ausführen einer Anwendung (210), die zum Ausführen durch einen Prozessor (101; 220) angepasst ist und mindestens zwei erste und zweite zusammenhängende Speicherressourcen (401-405; 901-906; 1101-1108; 1201-1208) verwendet, die einer Anwendung zugeordnet und in mindestens einem Speicherbereich (401-405) des Speichers (102; 230; 400; 900; 1100; 1200) angeordnet sind,
wobei das Verfahren (300) einen Schritt zum Zusammenführen (306) der mindestens zwei ersten und zweiten Speicherressourcen (901-906; 1101-1108; 1201-1208) zu einer dritten Speicherressource (803; 1111; 1112; 1211, 1212) aufweist, wenn die mindestens zwei ersten und zweiten Speicherressourcen (901-906; 1101-1108; 1201-1208) den selben Wert eines Sicherheitsattributs haben,
wobei das Verfahren ferner einen Schritt zum Erzeugen (307) von Daten zum Konfigurieren von Speicherbereichen des Speichers (102; 230; 400; 900; 1100; 1200) aufweist,
wobei der Wert des Sicherheitsattributs die Sicherheitsstufe eines Teils (401-405; 901-906; 1101-1108; 1201-1208) des Speichers (102; 230; 400; 900; 1100; 1200) anzeigt,
wobei der Wert des Attributs einer Speicherressource (901-906; 1101-1108; 1201-1208) der Anwendung (210) gleich zu Folgendem sein kann:
- sicher;
- nicht sicher; und
- nicht sicher aufrufbar,
wobei, wenn der Wert des Attributs des ersten Teils (1206) gleich nicht sicher ist und der Wert des Attributs des zweiten Teils (1207) gleich nicht sicher aufrufbar ist und der zweite Teil (1206) in einem Speicherbereich angeordnet ist, dessen Attributwert gleich nicht sicher aufrufbar ist, dann werden die mindestens zwei ersten und zweiten Teile (1206, 1207) zu dem dritten Teil (1212) zusammengeführt und der Wert des Attributs des dritten Teils (1212) ist gleich nicht sicher.

2. Vorrichtung (100) mit einer Konfigurationsschnittstelle (200), die ausgelegt ist zum Implementieren eines Verfahrens zum Konfigurieren (300) eines Speichers (230) zum Ausführen einer Anwendung (210), die dazu ausgelegt ist, von einem Prozessor (101; 220) ausgeführt zu werden, und mindestens zwei erste und zweite zusammenhängende Speicherressourcen (401-405; 901-906; 1101-1108; 1201-1208) verwendet, die einer Anwendung zugeordnet und in mindestens einem Speicherbereich (401-405) mindestens eines Speichers (102; 230; 400; 900; 1100; 1200) angeordnet sind,
wobei das Verfahren (300) einen Schritt zum Zusammenführen (306) der mindestens zwei ersten und zweiten Speicherressourcen (901-906; 1101-1108; 1201-1208) zu einer dritten Speicherressource (803; 1111; 1112; 1211, 1212) aufweist, wenn die mindestens zwei ersten und zweiten Teile (901-906; 1101-1108; 1201-1208) den selben Wert eines Sicherheitsattributs haben,
wobei das Verfahren ferner einen Schritt zum Erzeugen (307) von Daten zum Konfigurieren von Speicherbereichen des Speichers (102; 230; 400; 900; 1100; 1200) aufweist,
**dadurch gekennzeichnet, dass** der Wert des Sicherheitsattributs die Sicherheitsstufe eines Teils (401-405; 901-906; 1101-1108; 1201-1208) des Speichers (102; 230; 400; 900; 1100; 1200) anzeigt,
wobei der Wert des Attributs einer Speicherressource (901-906; 1101-1108; 1201-1208) der Anwendung (210) gleich zu Folgendem sein kann:
- sicher;
- nicht sicher; und
- nicht sicher aufrufbar,
wobei, wenn der Wert des Attributs des ersten Teils (1206) gleich nicht sicher ist und der Wert des Attributs des zweiten Teils (1207) gleich nicht sicher aufrufbar ist und der zweite Teil (1206) in einem Speicherbereich angeordnet ist, dessen Attributwert gleich nicht sicher aufrufbar ist, dann werden die mindestens zwei ersten und zweiten Teile (1206, 1207) zu dem dritten Teil (1212) zusammengeführt und der Wert des Attributs des dritten Teils (1212) ist gleich nicht sicher,
wobei die Vorrichtung ferner den Prozessor (101, 220) aufweist, der dazu ausgelegt ist, die Anwendung (210) auszuführen, und den mindestens einen Speicher (102; 230; 400; 900; 1100; 1200).

3. Nicht-transitorisches Mittel, das von einem Computer gelesen werden kann und Programmbefehle aufweist, die dazu ausgelegt sind, bei Ausführung dieser Befehle durch den Computer das Verfahren gemäß Anspruch 1 auszuführen.

## Claims

1. Method for configuring (300) a memory (230) to perform an application (210) adapted to be run by a processor (101; 220) and using at least two first and second contiguous memory resources (401-405; 901-906; 1101-1108; 1201-1208) associated to an application and disposed in at least one memory area (401-405) of the memory (102; 230; 400; 900; 1100; 1200),
wherein said method (300) comprises a step for merging (306) said at least two first and second memory resources (901-906; 1101-1108; 1201-1208) into a third memory resource (803; 1111; 1112; 1211, 1212), if said at least two first and second memory resources (901-906; 1101-1108; 1201-1208) have the same value of a security attribute,
the method further comprising a step for generating (307) data for configuring memory ranges of the memory (102; 230; 400; 900; 1100; 1200),
wherein said value of said security attribute indicates the security level of a portion (401-405; 901-906; 1101-1108; 1201-1208) of the memory (102; 230; 400; 900; 1100; 1200),
wherein said value of said attribute of a memory resource (901-906; 1101-1108; 1201-1208) of said application (210) can be equal to:
- secure;
- non-secure; and
- non-secure callable,
wherein, if the value of the attribute of the first portion (1206) is equal to non-secure, and the value of the attribute of the second portion (1207) is equal to non-secure callable, and the second portion (1206) is located in a memory area the attribute value of which is equal to non-secure callable, then said at least two first and second portions (1206, 1207) are merged into the third portion (1212) and the value of the attribute of the third portion (1212) is equal to non-secure.

2. Device (100) comprising a configuration interface (200) adapted to implement a method for configuring (300) a memory (230) to perform an application (210) adapted to be run by a processor (101; 220) and using at least two first and second contiguous memory resources (401-405; 901-906; 1101-1108; 1201-1208) associated to an application and disposed in at least one memory area (401-405) of at least one memory (102; 230; 400; 900; 1100; 1200),
wherein said method (300) comprises a step for merging (306) said at least two first and second memory resources (901-906; 1101-1108; 1201-1208) into a third memory resource (803; 1111; 1112; 1211, 1212), if said at least two first and second portions (901-906; 1101-1108; 1201-1208) have the same value of a security attribute,
the method further comprising a step for generating (307) data for configuring memory ranges of the memory (102; 230; 400; 900; 1100; 1200),
**characterized in that** said value of said security attribute indicates the security level of a portion (401-405; 901-906; 1101-1108; 1201-1208) of the memory (102; 230; 400; 900; 1100; 1200),
wherein said value of said attribute of a memory resource (901-906; 1101-1108; 1201-1208) of said application (210) can be equal to:
- secure;
- non-secure; and
- non-secure callable,
wherein, if the value of the attribute of the first portion (1206) is equal to non-secure, and the value of the attribute of the second portion (1207) is equal to non-secure callable, and the second portion (1206) is located in a memory area the attribute value of which is equal to non-secure callable, then said at least two first and second portions (1206, 1207) are merged into the third portion (1212) and the value of the attribute of the third portion (1212) is equal to non-secure,
said device further comprising said processor (101, 220) adapted to implementing the application (210), and said at least one memory (102; 230; 400; 900; 1100; 1200).

3. Non-transitory means readable by a computer comprising program instructions adapted, when these instructions are executed by the computer, to implement the method according to claim 1.
